(19) **Europäisches Patentamt**

**European Patent Office**

**Office européen des brevets**

(11) **EP 1 194 992 B1**

(12) **FASCICULE DE BREVET EUROPEEN**

(45) Date de publication et mention
de la délivrance du brevet:
**18.01.2006 Bulletin 2006/03**

(21) Numéro de dépôt: **00945977.7**

(22) Date de dépôt: **21.06.2000**

(51) Int Cl.:
**H02J 7/00** (2006.01)

(86) Numéro de dépôt international:
**PCT/FR2000/001726**

(87) Numéro de publication internationale:
**WO 2001/005014 (18.01.2001 Gazette 2001/03)**

(54) **PROCEDE ET DISPOSITIF DE CHARGE DE PLUSIEURS CELLULES ELECTROCHIMIQUES**

VERFAHREN UND VORRICHTUNG ZUM LADEN MEHRERER ELEKTROCHEMISCHER ZELLEN

METHOD AND DEVICE FOR CHARGING SEVERAL ELECTROCHEMICAL CELLS

(84) Etats contractants désignés:
**AT BE CH CY DE DK ES FI FR GB GR IE IT LI LU
MC NL PT SE**

(30) Priorité: **12.07.1999 FR 9909021**

(43) Date de publication de la demande:
**10.04.2002 Bulletin 2002/15**

(73) Titulaires:
• **Electricité de France
75008 Paris (FR)**
• **SCHNEIDER ELECTRIC INDUSTRIES SAS
92500 Rueil-Malmaison (FR)**

(72) Inventeurs:
• **LASCAUD, Stéphane
F-77300 Fontainebleau (FR)**
• **BAUDOIN, Eric
F-77250 Veneux-les-Sablons (FR)**
• **BETTEGA, Eric
F-38120 Le Fontanil Cornillon (FR)**
• **BARRAULT, Michel
F-38520 St Christophe-en-Oisans (FR)**

(74) Mandataire: **Jacobson, Claude
Cabinet Lavoix
2, Place d'Estienne d'Orves
75441 Paris Cedex 09 (FR)**

(56) Documents cités:
**EP-A- 0 798 839          WO-A-96/12333
US-A- 5 773 959**

• **LINDEMARK B: "INDIVIDUAL CELLVOLTAGE
EQUALIZERS (ICE) FOR RELIABLE BATTERY
PERFORMANCE" PROCEEDINGS OF THE
INTERNATIONAL TELECOMMUNICATIONS
ENERGY CONFERENCE (INTELEC) IEEE, vol.
CONF. 13, 1991, pages 196-201, XP000314580
US,NEW YORK ISBN: 0-87942-670-5**
• **BJÖRK D: "Maintenance of batteries"
PROCEEDING OF THE INTERNATIONAL
TELECOMMUNICATIONS ENERGY
CONFERENCE (INTELEC), 19 - 22 octobre 1986,
pages 355-360, XP002133286 Toronto, Canada**

EP 1 194 992 B1

## Description

La présente invention concerne un procédé de charge de plusieurs cellules électrochimiques, notamment des cellules Lithium-Polymère, connectées en série, un moyen de charge, permettant le réglage de la tension et du courant de charge.

L'invention s'applique notamment à l'utilisation des systèmes d'accumulateurs pour la traction des véhicules électriques (2,3 et 4 roues) et des véhicules thermiques avec autonomie en mode électrique, où il est souhaitable d'optimiser la charge des cellules afin d'augmenter le rayon d'action et l'autonomie du véhicule mais aussi de réduire le temps de charge en vue d'une augmentation de la disponibilité du véhicule.

Selon un procédé connu, on détecte en permanence l'état de charge de chaque cellule et lorsqu'une cellule a atteint un seuil de tension prédéterminé, on dérive le courant alimentant cette cellule.

Un système d'accumulateurs électrochimiques (appelé « batterie ») pour véhicule électrique est constitué de sous-ensembles élémentaires connectés en mode série permanent, appelés « cellules » dans le cas où leur tension unitaire est comprise entre 1 V et 4 V suivant la technologie d'accumulateur ou « modules » si la tension de l'assemblage série des cellules est comprise entre 6 V et 50 V.

Un dispositif de charge (extérieur à la batterie) est utilisé pour recharger la batterie. Il est raccordé au réseau de distribution d'énergie électrique, et dispose d'un système de communication avec chaque module. Ce système de communication permet de piloter la charge (lois, consignes) de la batterie.

Le procédé de charge de batterie connu s'effectue en règle générale en deux étapes :

La première étape consiste à charger le plus rapidement possible la batterie soit à courant constant (Ia) soit à puissance constante (Wa). Cette charge s'achève lorsque la batterie atteint un seuil de tension haut déterminé à l'avance.

La deuxième étape consiste à finir la charge soit à courant constant réduit (I) soit à puissance constante réduite (W).

Une variante de la deuxième étape de ce procédé de charge consiste à charger la batterie à potentiel constant (U), en laissant décroître le courant de charge jusqu'à un seuil de courant minimum.

Ce procédé présente l'inconvénient que l'état de charge de la batterie ne peut être contrôlé que globalement. Il ne permet pas non plus de maximiser l'état de charge de toutes les cellules sans surcharger certaines d'entre elles.

Afin d'optimiser la charge des cellules et des modules qui composent la batterie, un procédé connu de contournement total du courant de charge de chaque cellule était proposé. Son rôle est de permettre la charge des cellules non chargées sans surcharger les cellules qui sont déjà chargées. La charge des cellules est dans ce cas individualisée.

La mise en oeuvre des dispositifs pour la réalisation d'un procédé de contournement total du courant de charge de chaque cellule ou de chaque module induit : en premier lieu, un surcoût lié à l'utilisation de composants d'électroniques de puissance et de régulation, et en second lieu, un surpoids par la présence d'un système de refroidissement avec liquide.

Un procédé de charge selon l'état de la technique est connu par exemple du document WO-A-9612333.

L'invention a pour but de creer un procédé qui permet d'optimiser la charge d'une façon économique et fiable et avec une installation de poids réduit.

A cet effet, l'invention a pour objet un procédé de charge de plusieurs cellules électrochimiques, notamment des cellules Lithium-Polymère, connectées en série, à un chargeur permettant le réglage de la tension et du courant de charge, procédé dans lequel on détecte en permanence la tension de chaque cellule et lorsqu'une cellule a atteint un seuil de tension prédéterminé, on dérive le courant de cette cellule, caractérisé en ce que lorsqu'une première cellule atteint le seuil de tension, on applique un incrément au courant de charge desdites plusieurs cellules et simultanément on branche en parallèle à ladite première cellule, une résistance de dérivation d'un courant équivalent à l'incrément du courant de charge desdites plusieurs cellules et en ce que lorsque chacune des cellules suivantes atteint ledit seuil de tension, on branche également en parallèle à chacune desdites cellules suivantes, une résistance de dérivation d'un courant égal à l'incrément du courant de charge desdites plusieurs cellules.

En outre l'invention peut comporter une ou plusieurs des caractéristiques suivantes :

- à partir du moment où l'incrément est appliqué au courant de charge desdites plusieurs cellules, si la partie du courant non dérivé provoque une surcharge dans une des cellules qui a atteint le seuil de tension, on applique au moins un décrément au courant de charge jusqu'à ce que la tension de ladite cellule soit de nouveau égale au seuil de tension,
- le courant qu'on dérive est compris entre 1 % à 30% et de préférence de 5% à 15% du courant de charge de toutes les cellules,
- le courant de charge de toutes les cellules est calculé en fonction de la température de chacune des cellules,
- si la température d'une au moins des cellules est en dehors d'une plage de températures souhaitée, on chauffe ou on laisse refroidir les cellules jusqu'à ce que leur température soit dans la zone souhaitée,
- la plage de températures est comprise entre 40°C et 110°C, et de préférence entre 50°C et 100°C,
- le courant de charge est calculé selon la formule :

$$I\_charge = A \exp \left[\frac{-B}{2T}\right] \bullet S$$ où S est la surface libre des cellules à charger, A est compris

entre $80 \dfrac{mA}{cm^2}$ et $150 \dfrac{mA}{cm^2}$, et de préférence entre $105 \dfrac{mA}{cm^2}$ et $110 \dfrac{mA}{cm^2}$ et B est compris entre 4200 K et 4800 K, et de préférence entre 4400 K et 4600 K,

- la capacité surfacique de chaque cellule est calculée selon la formule

$$Cmax\_charge = \frac{(\alpha T + \beta) \bullet S}{I\_charge}$$ où $\alpha$ est

égal $0{,}01 \dfrac{mA^2}{Kcm^4}$ et $\beta$ est compris entre

$3{,}3 \dfrac{mA^2}{cm^4}$ et $3{,}2 \dfrac{mA^2}{cm^4}$, et de préférence entre

$3{,}24 \dfrac{mA^2}{cm^4}$ et $3{,}26 \dfrac{mA^2}{cm^4}$,

S est la surface de chaque cellule exprimée en cm$^2$ et I_charge est le courant de charge suivant la formule précitée et le temps de charge est compris entre 5 et 15 heures, de préférence entre 7 et 10 heures,

- avant qu'une cellule ait atteint le seuil de tension et lorsque l'écart de tension entre cette cellule et une cellule ayant une tension de charge minimale est supérieur à une valeur prédéterminée, on dérive une partie du courant de charge de cette cellule,
- l'écart de tension est compris entre 10 mV et 200 mV.

L'invention a également pour objet un dispositif de charge de plusieurs cellules électrochimiques, notamment des cellules Lithium-Polymère, connectées en série à un chargeur permettant le réglage de la tension et du courant de charge, pour la mise en oeuvre du procédé précité comprenant des moyens de détection de la tension de chaque cellule, des moyens de dérivation de courant de chaque cellule, des moyens de connexion desdits moyens de dérivation à chaque cellule, et comporte des moyens de comparaison de la tension de chaque cellule à un seuil de tension, des moyens d'application d'un incrément au courant de charge desdites plusieurs cellules lorsque la tension dans l'une desdites plusieurs cellules atteint un seuil de tension et des moyens de dérivation d'une partie du courant équivalent à l'incrément.

Le dispositif peut comporter une ou plusieurs des caractéristiques suivantes :

- les moyens de détection de la tension de chaque cellule comprennent un capteur de tension, associé à chaque cellule, les moyens de dérivation de courant de chaque cellule comprennent une résistance, associée à chaque cellule, les moyens de connexion desdits moyens de dérivation comprennent un déclencheur, associé à chaque cellule, les moyens de comparaison de tension comprennent un capteur de tension associé à chaque cellule relié à une unité de commande, qui pilote lesdits déclencheurs, les moyens d'application d'un incrément au courant de charge comprennent ladite unité de commande,
- l'unité de commande comprend en outre des moyens de comparaison des sorties des capteurs de température de chaque cellule à un seuil de température.

L'invention sera mieux comprise à la lecture de la description qui va suivre, donnée uniquement à titre d'exemple et faite en se référant aux dessins annexés sur lesquels :

- la Figure 1 est une représentation schématique d'un dispositif pour la mise en oeuvre du procédé selon l'invention ;
- la Figure 2 est un organigramme du procédé de chargement de batterie suivant l'invention; et
- la Figure 3 est un graphique représentant la variation de la tension et du courant dans le temps dans un dispositif de la Figure 1.

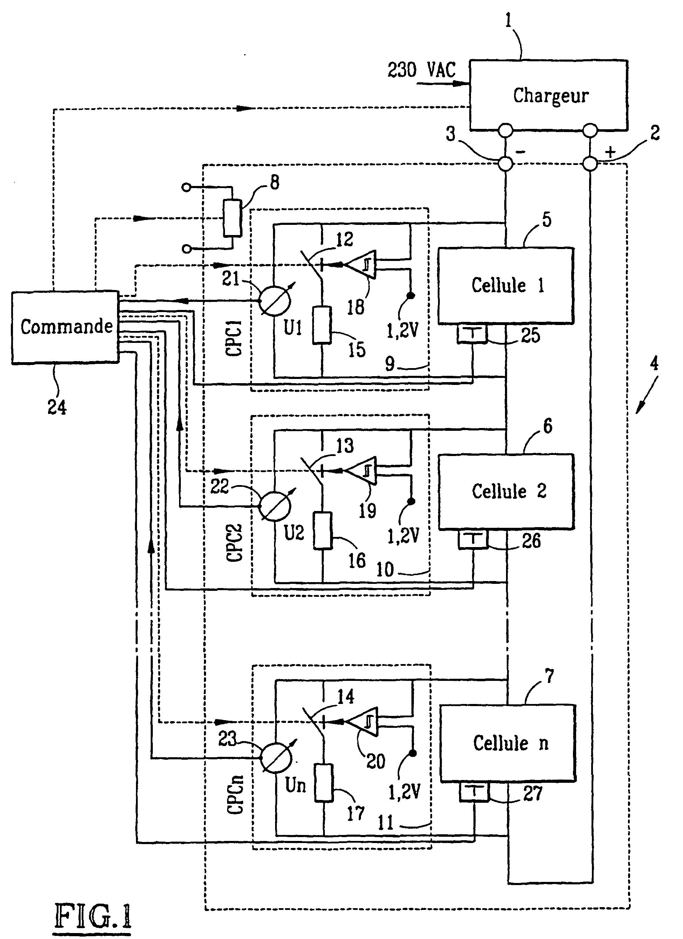

Sur la Figure 1, est représenté un ensemble utilisé pour la mise en oeuvre du procédé de l'invention.
Ce dispositif comporte un chargeur 1 qui est relié aux bornes positive 2 et négative 3 d'un module 4. Ce module formant soit la totalité, soit une partie d'une batterie. Le module contient n cellules électrochimiques, du type Lithium-Polymère, dont les deux premières 5,6 et la dernière 7 sont représentées. Lesdites n cellules sont connectées l'une à l'autre en série, un pôle de la cellule 5 et de la cellule 7 étant raccordés respectivement aux bornes 2,3 du module et par conséquent au chargeur 1.
Le module 4 comporte en outre un élément de chauffage 8 à résistance reliée à une source d'énergie non-représentée.
A chaque cellule du module est connecté en parallèle un système de contournement partiel 9,10,11 comportant un déclencheur de dérivation 12,13,14 et une résistance 15,16,17 connectée en série avec le déclencheur de dérivation correspondant.
Chacun de ces systèmes de contournement partiel 9,10,11 comporte en outre un comparateur de tension 18,19,20 qui est relié au côté négatif de la cellule et à une source de tension référence de 1,2 V, et qui permet d'actionner le déclencheur de dérivation 12,13,14 associé.
Dans chaque système de contournement partiel 9,10,11, un capteur de tension 21,22,23 est relié en parallèle à la résistance 15,16,17 et au déclencheur de dérivation 12,13,14, et permet de mesurer la tension de la cellule associée. Ce capteur transmet la valeur de la tension à une interface de communication 24.

Cette interface de communication 24 reçoit aussi des informations de capteurs de température 25,26,27 reliés à chaque cellule.

Ainsi, l'interface de communication 24 a connaissance de la température et de la tension de chaque cellule 5,6,7.

L'interface de communication 24 est reliée par une ligne pilote à l'élément de chauffage 8 et, par une autre ligne pilote au chargeur 1, ce qui lui permet de commander le courant de charge, la tension de charge, ainsi que l'amenée de chaleur dans le module par l'élément à résistance 8.

En outre, l'interface de communication 24 commande chacun des déclencheurs de dérivation 12,13,14 par des lignes pilotes correspondantes.

Le dispositif fonctionne de la façon suivante :

Lorsque le chargeur 1 est connecté au module 4, l'interface de commande 24 commence à mesurer la température de chaque cellule 5,6,7 au moyen des capteurs de température 25,26,27.

Si la température d'une des cellules est supérieure à une température de seuil (110°C en cas de cellule au Li-Polymère), l'interface de commande 24 arrête l'élément chauffant 8 et attend que la température ait baissé sous la température de seuil. Dans le cas d'une température trop faible l'interface de commande 24 déclenche le chauffage par l'élément à résistance 8 et attend que la température ait atteint la température de seuil minimum (70°C en cas de cellules Li-Polymères).

Quand toutes les cellules ont une température acceptable, l'interface de commande 24 donne l'instruction au chargeur 1 de charger le module 4 avec un courant de charge qui est calculé par l'interface en fonction de la température du module.

$$I\_charge = A \exp\left[\frac{-B}{2T}\right] \bullet S$$

où A est compris entre 80 mA/cm$^2$ et 150 mA/cm$^2$, et de préférence entre 105 mA/cm$^2$ et 110 mA/cm$^2$ et B est compris entre 4200 K et 4800 K, et de préférence entre 4400 K et 4600 K.

S est la surface de lithium développé par chaque cellule exprimée en cm$^2$.

Le module est chargé avec un courant I_charge. Pendant la charge, le courant de charge est recalculé et mis au point en fonction de la température des cellules, à des intervalles de quelques secondes.

Lors de cette phase de charge, l'interface de commande 24 déclenche par l'intermédiaire des lignes pilotées, pour les cellules dont l'écart de tension par rapport à la valeur minimale des tensions de toutes les cellules est supérieur à une valeur Ecart_tension_maximum, le contournement d'une partie du courant égale à I_incrément, qui est, dans cet exemple, de 10% du courant de charge.

Cette valeur Ecart_tension_maximum est comprise entre 25 mV et 200 mV, de préférence entre 30 mV et 100 mV.

Si l'écart de tension d'une cellule par rapport à la tension minimum des cellules est inférieur à une valeur Ecart_tension_minimum comprise entre 10 mV et 100 mV, de préférence entre 20 mV et 60 mV, l'interface de commande 24 ouvre le déclencheur de contournement ce cette cellule.

La valeur Ecart_tension_minimum est nécessairement inférieure ou égale à Ecart_tension_maximum.

Cette phase de charge se passe jusqu'à ce qu'une cellule atteigne son seuil de tension maximum, Umax_fin_charge, comprise entre 3,1 V et 3,7 V et de préférence entre 3, 2 V et 3,5 V.

A ce stade de la charge, le comparateur de tension 18,19 ou 20 de la cellule qui a atteint son seuil de tension maximum agit sur le déclencheur de dérivation 12,13 ou 14 associé et dérive un courant équivalent à I_incrément par l'intermédiaire de la résistance 15,16 ou 17 associée. Simultanément, l'interface de commande 24 du module demande au chargeur 1 d'augmenter le courant de charge d'une valeur I_incrément comprise entre 0,5 A et 5 A, et de préférence entre 1 A et 2 A.

L'interface de commande 24 commande alors la réduction graduelle du courant de charge d'une valeur prédéterminée de telle sorte que la tension aux bornes de chaque cellule n'excède pas Umax_fin_charge. La réactualisation du courant est donc permanente à des intervalles de quelques secondes.

Quand les autres cellules atteignent successivement leur tension prédéterminée le courant I_incrément est également dérivé par rapport à elles, et le courant de charge est baissé jusqu'à un courant égal à I_incrément. Le courant traversant une cellule dont la tension est au moins à Umax_fin_charge est alors nul. Si la tension aux bornes d'une cellule est inférieure à ce seuil, la charge continue avec une valeur égale à 1_incrément.

La capacité surfacique de chaque cellule dépend du temps de charge maximum et du courant de charge admissible et se calcule suivant la formule

$$Cmax\_charge = \frac{(\alpha T + \beta) \bullet S}{I\_charge}$$ en $\frac{mAh}{cm^2}$ ou $\alpha$

est égal à $0,01 \dfrac{mA^2}{Kcm^4}$ et $\beta$ est compris entre

$$3,3 \; \frac{mA^2}{cm^4} \; \text{ et } \; 3,2 \; \frac{mA^2}{cm^4} \; , \text{ et de préférence entre}$$

$$3,24 \; \frac{mA^2}{cm^4} \; \text{ et } \; 3,26 \; \frac{mA^2}{cm^4} \; .$$

S est la surface de chaque cellule exprimée en cm$^2$ et I_charge est le courant de charge suivant la formule précitée.

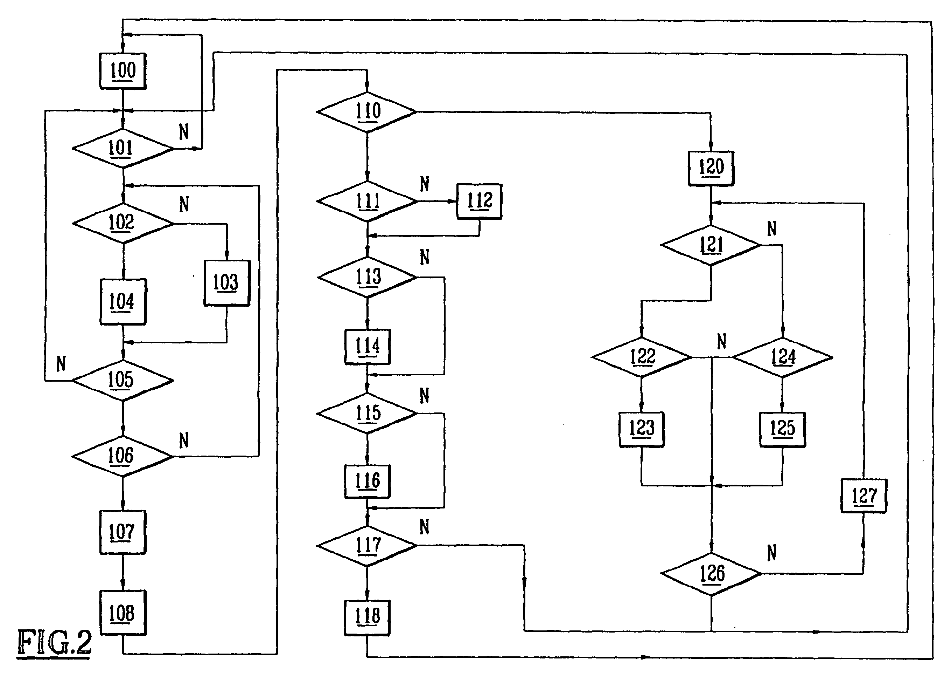

Le procédé de l'invention va maintenant être décrit en référence à l'organigramme de la figure 2.

Le procédé commence par une étape de démarrage 100, au cours de laquelle les cellules 5,6,7 sont connectées en série et aucun contournement de cellule n'est réalisé.

Au cours d'une deuxième étape 101, on vérifie si le chargeur 1 est connecté au module 4. Dans la négative, on revient à l'étape de démarrage 100 car la charge n'est possible qu'avec le chargeur 1 connecté. Dans l'affirmative, une charge est possible. Alors à l'étape 102, on mesure les températures de chacune des cellules 5,6,7 et on compare chacune de celles-ci à une température maximale de début de charge. Si la température d'une ou de plusieurs des cellules 5,6,7 est au-dessus de ladite température maximale, au cours de l'étape 103, on arrête le chauffage du module 4. Si la température de toutes les cellules 5,6,7 est au-dessous de ladite température maximale, le chauffage du module est déclenché au cours de l'étape 104.

La prochaine étape 105 consiste à comparer les températures de chacune des cellules 5,6,7 à une température de seuil minimum de début de charge. Si la température des cellules 5,6,7 est au-dessous de la température minimum, on retourne à l'étape 101 en formant ainsi une boucle de vérification de température du module 4.

Dans le cas contraire, on passe à l'étape 106 de mesure de tension et de comparaison avec une tension maximale de début de charge.

Si la température de chacune des cellules 5,6,7 est entre les deux températures limites, on met en oeuvre l'étape 106 de mesure de la tension de chacune des cellules et on compare celle-ci avec une tension maximale de début de charge. Si la tension de toutes les cellules 5,6,7 est au-dessous de cette tension de seuil, on retourne à l'étape 102.

Sinon, on calcule lors de l'étape 107, un courant de charge en fonction de la température et au cours de l'étape 108, on commence à introduire un courant dans le module 4 qui est fonction de la température du module.

Au cours de l'étape 110, on surveille si dans une des cellules 5,6,7, la tension atteint ou dépasse la tension de seuil qui indique la fin de la charge pour cette cellule. Quand la tension dans la cellule atteint, ou dépasse la tension de seuil, on dérive une partie du courant traversant cette cellule 111,112. En outre, si ladite cellule est la première à atteindre la tension de seuil de fin de charge, au cours des étapes 113 et 114, on augmente le courant du chargeur d'une valeur I_incrément. Le courant dérivé par rapport à la cellule est égal à ladite augmentation I_incrément.

Il en résulte que chaque cellule qui n'a pas atteint son niveau de charge nécessaire est alimentée avec un courant supérieur à celui des cellules qui ont déjà atteint le niveau de charge nécessaire.

Au cours de l'étape 115, les cellules chargées reçoivent encore du courant de charge, et on surveille si la tension de chacune des cellules ne commence pas à augmenter. Si c'est le cas, on diminue au cours de l'étape 116, le courant du chargeur d'une valeur I_décrément. Ainsi, on évite une surcharge des cellules déjà chargées.

L'étape 117 consiste à vérifier si la dérivation de courant est déjà déclenchée pour toutes les cellules 5,6,7.

Dans la négative, on recommence la procédure par l'étape 101.

Si oui, toutes le cellules 5,6,7 sont à l'état chargé et prêtes à être utilisées. On réduit alors au cours de l'étape 118, le courant du chargeur 1 à la valeur I_incrément, ce qui a comme conséquence que le courant dans les cellules devient nul.

Aussi longtemps qu'aucune des cellules n'a pas atteint ou surpassé sa tension de seuil, ce qui est vérifié lors de l'étape 110, le procédé de contournement partiel de courant se déroule selon un processus différent du précédent et qui va être décrit en référence aux étapes 120 à 127.

Il s'agit d'une boucle qui est exécutée pour chacune des cellules 5,6,7 du module.

On commence par la première cellule 5 (étape 120) et on vérifie si une partie du courant est déjà dérivée par rapport à cette cellule (étape 121).

Si le courant n'est pas dérivé partiellement, on vérifie à l'étape 122 si le décalage entre la tension de cette cellule et la valeur minimale des tensions de toutes les cellules du module est plus grand qu'un écart maximal permis.

Si la tension de la cellule considérée est suffisamment proche de la tension minimale de toutes les cellules, on continue d'appliquer la totalité du courant de charge à cette cellule. Sinon, c'est-à-dire, si la tension de la cellule est trop élevée par rapport à la tension minimale des cellules, une partie du courant de charge est dérivé par rapport à cette cellule, ce qui est réalisé à l'étape 123.

Dans le cas, où la vérification du contournement partiel du courant (étape 121) a comme résultat qu'une partie du courant est déjà dérivée par rapport à cette cellule, on procède à la vérification si la tension de cette cellule n'est pas trop proche de la tension minimale de toutes les cellules (étape 124). Si oui, la dérivation partielle est arrêtée et ainsi la totalité du courant de charge traverse cette cellule (étape 125). Il en résulte une charge accéléré de cette cellule.

Au cours de l'étape 126, on vérifie si on a déjà vérifié la tension de toutes les cellules. Dans la négative, on passe à la cellule suivante au cours de l'étape 127.

Si oui, on retourne à l'étape 101 de vérification de la connexion du chargeur.

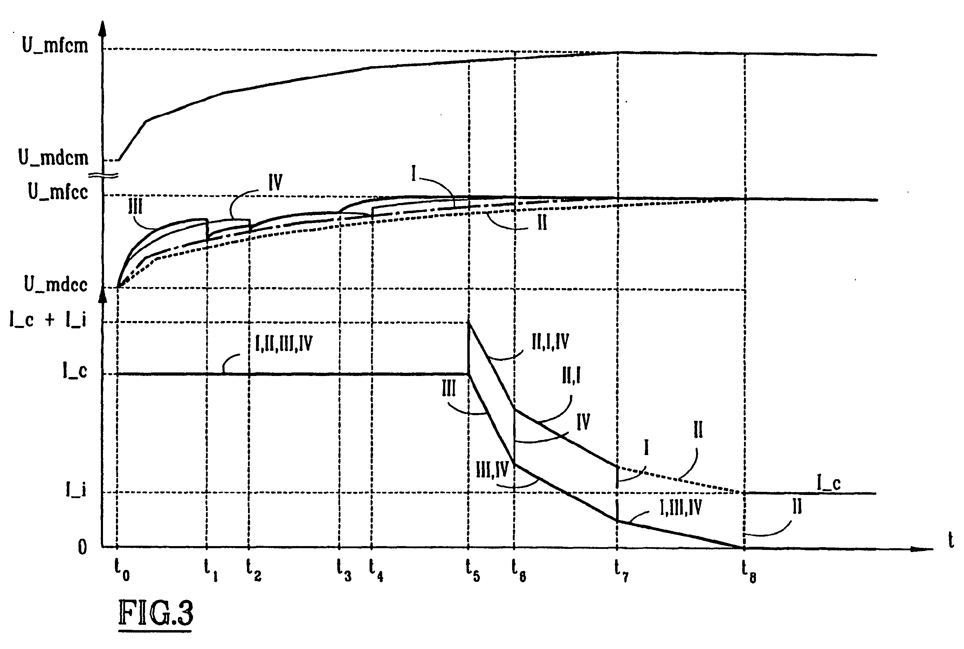

La Figure 3 représente à titre d'exemple l'allure de la charge d'un module de quatre cellules en série.

La charge commence au temps $t_0$ avec un courant de charge I_c (I_charge) qui circule à travers les quatre cellules. La tension des quatre cellules est la tension minimale de début de charge (U_mdcc) et la tension du module est la tension minimale de début de charge (U_mdcm). Les cellules se chargent à des vitesses différentes, dans un ordre quelconque.

On admet pour l'exposé que la cellule III se charge le plus vite jusqu'au temps $t_1$. A ce moment l'écart de tension de cette cellule par rapport à la cellule qui se charge le moins vite (par exemple cellule II) devient plus grand que l'écart permis par l'interface de commande 24 et un courant I_i (I_incrément) est dérivé par rapport à la cellule III.

En conséquence, la tension de la cellule III baisse et cette cellule se charge moins vite.

Au temps $t_2$, la tension de la cellule IV a également atteint par rapport à la tension de la cellule II un écart tel qu'un courant I_i est dérivé par rapport à cette cellule IV.

Au temps $t_3$, l'écart de la cellule III par rapport à la cellule II tombe au-dessous d'un seuil permis par l'interface de commande 24 et de nouveau tout le courant I_c est appliqué à la cellule III. Son processus de charge est alors accéléré.

Au temps $t_4$, il se passe la même chose pour la cellule IV qu'au temps $t_3$ pour la cellule III.

Entre $t_4$ et $t_5$, toutes les cellules sont chargées par I_c quand la première cellule (cellule III dans ce cas) atteint la tension de fin de charge (U_mfcc).

Le courant de charge est alors incrémenté de la valeur I_i, mais la cellule III est contournée par ce courant grâce au système de contournement partiel. Pour empêcher une surcharge de cette cellule, le courant est successivement baissé. L'une après l'autre les cellules IV, I et II atteignent la tension de fin de charge (U_mfcc) aux temps $t_6$, $t_7$, $t_8$.

A la fin de la charge, le courant appliqué à chaque cellule est O, tandis que le courant de charge est égal à I_i.

La tension finale du module est appelée U_mfcm

Ainsi le niveau de charge des cellules peut être égalisé et optimisé avec des composants électroniques relativement simples et bon marché.

Le procédé et le dispositif selon l'invention ont comme avantages de :

- maximiser et d'égaliser le niveau de charge des cellules sans avoir recours à une étape de surcharge préjudiciable pour la fonctionnalité et le sécurité du module ;

- réduire le temps de charge du module en optimisant le courant de charge ;
- maximiser le niveau de charge des cellules en fonction de la température du module ;
- éviter de recourir à une électronique de puissance coûteuse pour le contournement des cellules ;
- éviter de recourir à un système de refroidissement par fluide caloporteur pour évacuer la chaleur dissipée comme c'est le cas dans un système de contournement total.

L'invention peut s'appliquer en plus :

- pour l'alimentation des équipements électriques embarqués et le démarrage des véhicules électriques ou des véhicules thermiques avec ou sans autonomie électrique;
- pour les alimentations électriques de secours;
- pour les centrales électriques comprenant au moins un moyen de production d'électricité par énergie renouvelable (photovoltaïque, éolienne, biomasse...);
- pour le stockage de l'électricité sur le réseau électrique.

## Revendications

1.  Procédé de charge de plusieurs cellules (5,6,7) électrochimiques, notamment des cellules Lithium-Polymère, connectées en série, à un chargeur (1) permettant le réglage de la tension et du courant de charge, procédé dans lequel on détecte en permanence la tension de chaque cellule et lorsqu'une cellule a atteint un seuil de tension prédéterminé, on dérive le courant de cette cellule, **caractérisé en ce que** lorsqu'une première cellule atteint le seuil de tension, on applique un incrément au courant de charge desdites plusieurs cellules (5,6,7) et simultanément on branche en parallèle à ladite première cellule, une résistance de dérivation d'un courant équivalent à l'incrément du courant de charge desdites plusieurs cellules (5,6,7) et **en ce que** lorsque chacune des cellules suivantes atteint ledit seuil de tension, on branche également en parallèle à chacune desdites cellules suivantes, une résistance de dérivation d'un courant égale à l'incrément du courant de charge desdites plusieurs cellules (5,6,7).

2.  Procédé de charge de plusieurs cellules électrochimiques selon la revendication 1, **caractérisé en ce qu'**à partir du moment où l'incrément est appliqué au courant de charge desdites plusieurs cellules, si la partie du courant non dérivé provoque une surcharge dans une des cellules qui a atteint le seuil de tension, on applique au moins un décrément au courant de charge jusqu'à ce que la tension de ladite cellule soit de nouveau égale au seuil de tension.

**3.** Procédé selon l'une des revendications 1 ou 2, **caractérisé en ce que** le courant qu'on dérive est compris entre 1% à 30%, et de préférence de 5% à 15% du courant de charge de toutes les cellules (5,6,7).

**4.** Procédé selon la revendication 3, **caractérisé en ce que** le courant de charge de toutes les cellules (5,6,7) est calculé en fonction de la température de chacune des cellules.

**5.** Procédé selon la revendication 4, **caractérisé en ce que** si la température d'une au moins des cellules est en dehors d'une plage de températures souhaitée, on chauffe ou on laisse refroidir les cellules jusqu'à ce que leur température soit dans la plage souhaitée.

**6.** Procédé selon la revendication 5, **caractérisé en ce que** la plage de températures est comprise entre 40°C et 110°C, et de préférence entre 50°C et 100°C.

**7.** Procédé selon l'une des revendications 1 à 6, **caractérisé en ce que** le courant de charge est calculé selon la formule :

$$\text{I\_charge} = A \exp{[\frac{-B}{2T}]} \bullet S$$

où S est la surface libre des cellules à charger, A est compris entre $80 \ \frac{mA}{cm^2}$ et $150 \ \frac{mA}{cm^2}$, et de préférence entre $105 \ \frac{mA}{cm^2}$ et $110 \ \frac{mA}{cm^2}$ et B est compris entre 4200 K et 4800 K, et de préférence entre 4400 K et 4600 K.

**8.** Procédé selon la revendication 7, **caractérisé en ce que** la capacité surfacique de chaque cellule est calculée selon la formule

$$\text{Cmax\_charge} = \frac{(\alpha T + \beta) \bullet S}{I\_charge}$$

où $\alpha$ est égal à $0{,}01 \ \frac{mA^2}{Kcm^4}$ et $\beta$ est compris entre $3{,}3 \ \frac{mA^2}{cm^4}$ et $3{,}2 \ \frac{mA^2}{cm^4}$, et de préférence entre $3{,}24 \ \frac{mA^2}{cm^4}$ et $3{,}26 \ \frac{mA^2}{cm^4}$, et S est la surface de chaque cellule exprimée en $cm^2$ et I\_charge est le courant de charge suivant la formule de la revendication 7 et **en ce que** le temps de charge est compris entre 5 et 15 heures, de préférence entre 7 et 10 heures.

**9.** Procédé selon la revendication 8, **caractérisé en ce qu'**avant qu'une cellule ait atteint le seuil de tension et lorsque l'écart de tension entre cette cellule et une cellule ayant une tension de charge minimale est supérieur à une valeur prédéterminée, on dérive une partie du courant de charge de cette cellule.

**10.** Procédé selon la revendication 9, **caractérisé en ce que** ledit écart de tension est compris entre 10 mV et 200 mV.

**11.** Dispositif de charge de plusieurs cellules (5,6,7) électrochimiques, notamment des cellules Lithium-Polymère, connectées en série à un chargeur (1) permettant le réglage de la tension et du courant de charge, pour la mise en oeuvre du procédé selon l'une quelconque des revendications 1 à 10, ledit dispositif comprenant des moyens de détection de la tension (21,22,23) de chaque cellule, des moyens de dérivation de courant (15,16,17) de chaque cellule, des moyens de connexion (12,13,14) desdits moyens de dérivation à chaque cellule (5,6,7), **caractérisé en ce qu'**il comporte en outre des moyens de comparaison de la tension de chaque cellule à un seuil de tension (18,19,20), des moyens d'application d'un incrément (24) au courant de charge desdites plusieurs cellules (5,6,7) lorsque la tension dans l'une desdites plusieurs cellules (5,6,7) atteint un seuil de tension et des moyens de dérivation d'une partie du courant (15, 16, 17) équivalent à l'incrément.

**12.** Dispositif selon la revendication 11, **caractérisé en ce que** les moyens de détection de la tension de chaque cellule comprennent un capteur de tension (21,22,23), associé à chaque cellule, les moyens de dérivation de courant de chaque cellule comprennent une résistance (15,16,17), associée à chaque cellule, les moyens de connexion desdits moyens de dérivation comprennent un déclencheur (12,13,14), associé à chaque cellule, les moyens de comparaison de tension comprennent un capteur de tension (21,22,23) associé à chaque cellule relié à une unité de commande (24), qui pilote lesdits déclencheurs (12,13,14), les moyens d'application d'un incrément au courant de charge comprennent ladite unité de commande (24).

**13.** Dispositif selon la revendication 12, **caractérisé en ce que** l'unité de commande (24) comprend en outre des moyens de comparaison des sorties des capteurs de température (25,26,27) de chaque cellule (5,6,7) à un seuil de température.

**Patentansprüche**

1. Verfahren zum Laden mehrerer elektrochemischer Zellen (5, 6, 7), insbesondere Lithium-Polymer-Zellen, die in Serie mit einer Ladevorrichtung (1) verbunden sind, welche die Regulierung der Spannung und des Ladestroms erlaubt, ein Verfahren, in welchem die Spannung jeder Zelle ständig erfasst wird und, wenn eine Zelle eine vorbestimmte Schwelle der Spannung erreicht hat, der Strom dieser Zelle abgezweigt wird, **dadurch** charakterisiert, dass, wenn eine erste Zelle die Schwelle der Spannung erreicht, ein Inkrement an dem Ladestrom der genannten mehreren Zellen (5, 6, 7) vorgenommen wird und gleichzeitig parallel an die genannte erste Zelle ein Widerstand zur Abzweigung eines Stroms angeschlossen wird, der gleich dem Inkrement des Ladestroms der genannten mehreren Zellen (5, 6, 7) ist, und dass, wenn jede der folgenden Zellen die genannte Schwelle der Spannung erreicht, gleichermaßen parallel an jeder der genannten folgenden Zellen ein Widerstand zur Abzweigung eines Stroms angeschlossen wird, der gleich dem Inkrement des Ladestroms der genannten mehreren Zellen (5, 6, 7) ist.

2. Verfahren zum Laden mehrerer elektrochemischer Zellen gemäß Anspruch 1, **dadurch** charakterisiert, dass von dem Zeitpunkt an, wo das Inkrement an dem Ladestrom der genannten mehreren Zellen vorgenommen wird, wenn der Teil des nicht abgezweigten Stroms eine Überladung in einer der Zellen verursacht, welche die Schwelle der Spannung erreicht hat, mindestens ein Dekrement an dem Ladestrom vorgenommen wird, bis die Spannung der genannten Zelle wieder gleich der Schwelle der Spannung ist.

3. Verfahren gemäß einem der Ansprüche 1 oder 2, **dadurch** charakterisiert, dass der Strom, der abgezweigt wird, zwischen 1% und 30% und vorzugsweise von 5% bis 15% des Ladestroms aller Zellen (5, 6, 7) liegt.

4. Verfahren gemäß Anspruch 3, **dadurch** charakterisiert, dass der Ladestrom aller Zellen (5, 6, 7) als Funktion der Temperatur jeder der Zellen berechnet wird.

5. Verfahren gemäß Anspruch 4, **dadurch** charakterisiert, dass man, wenn die Temperatur mindestens einer der Zellen außerhalb eines gewünschten Temperaturbereichs ist, die Zellen erwärmt oder abkühlen lässt, bis ihre Temperatur in dem gewünschten Bereich ist.

6. Verfahren gemäß Anspruch 5, **dadurch** charakterisiert, dass der Temperaturbereich zwischen 40°C und 110°C und vorzugsweise zwischen 50°C und 100°C liegt.

7. Verfahren gemäß einem der Ansprüche 1 bis 6, **dadurch** charakterisiert, dass der Ladestrom gemäß der Formel: $I\_charge = A \exp\left[\dfrac{-B}{2T}\right] \bullet S$ berechnet wird, wo S die freie Oberfläche der zu ladenden Zellen ist, A zwischen $80\ \dfrac{mA}{cm^2}$ und $150\ \dfrac{mA}{cm^2}$ und vorzugsweise zwischen $105\ \dfrac{mA}{cm^2}$ und $110\ \dfrac{mA}{cm^2}$ liegt, und B zwischen 4200 K und 4800 K und vorzugsweise zwischen 4400 K und 4600 K liegt.

8. Verfahren gemäß Anspruch 7, **dadurch** charakterisiert, dass die Oberflächenkapazität jeder Zelle gemäß der Formel $Cmax\_charge = \dfrac{(\alpha T + \beta) \bullet S}{I\_charge}$ berechnet wird, wo $\alpha$ gleich $0{,}01\ \dfrac{mA^2}{Kcm^4}$ und $\beta$ zwischen $3{,}3\ \dfrac{mA^2}{cm^4}$ und $3{,}2\ \dfrac{mA^2}{cm^4}$ und vorzugsweise zwischen $3{,}24\ \dfrac{mA^2}{cm^4}$ und $3{,}26\ \dfrac{mA^2}{cm^4}$ liegt, und S die Oberfläche jeder Zelle, ausgedrückt in cm$^2$, ist, und I_charge der Ladestrom gemäß der Formel des Anspruchs 7 ist, und dass die Ladezeit zwischen 5 und 15 Stunden, vorzugsweise zwischen 7 und 10 Stunden liegt.

9. Verfahren gemäß Anspruch 8, **dadurch** charakterisiert, dass, bevor eine Zelle die Schwelle der Spannung erreicht hat und wenn die Abweichung der Spannung zwischen dieser Zelle und einer Zelle, die eine minimale Ladespannung hat, höher als ein vorbestimmter Wert ist, ein Teil des Ladestroms dieser Zelle abgezweigt wird.

10. Verfahren gemäß Anspruch 9, **dadurch** charakterisiert, dass die genannte Abweichung der Spannung zwischen 10mV und 200mV liegt.

11. Vorrichtung zum Laden mehrerer elektrochemischer Zellen (5, 6, 7), insbesondere Lithium-Polymer-Zellen, die in Serie mit einer Ladevorrichtung (1) verbunden sind, welche die Regulierung der Spannung und des Ladestroms erlaubt, für die Ausführung des Verfahrens gemäß irgendeinem der Ansprüche 1 bis 10, wobei die genannte Vorrichtung Mittel zur Erfassung der Spannung (21, 22, 23) jeder Zelle, Mittel zur Abzweigung des Stroms (15, 16, 17) jeder Zelle und Mittel zur Verbindung (12, 13, 14) der genannten Mittel zur Abzweigung an jede Zelle (5, 6, 7) umfasst, **dadurch** charakterisiert, dass sie außerdem Mittel zum Vergleich der Spannung jeder Zelle mit einer Schwelle der Spannung (18, 19, 20), Mittel zur Anwendung eines Inkrements (24) an dem Ladestrom der genannten mehreren Zellen (5, 6, 7), wenn die Spannung in einer der genannten mehreren Zellen (5, 6, 7) eine Schwelle der Spannung erreicht, und Mittel zur Abzweigung eines Teils des Stroms (15, 16, 17), der gleich dem Inkrement ist, aufweist.

12. Vorrichtung gemäß Anspruch 11, **dadurch** charakterisiert, dass die Mittel zur Erfassung der Spannung jeder Zelle einen Spannungssensor (21, 22, 23) umfassen, der mit jeder Zelle verbunden ist, die Mittel zur Abzweigung des Stroms jeder Zelle einen Widerstand (15, 16, 17) umfassen, der mit jeder Zelle verbunden ist, die Mittel zur Verbindung der genannten Mittel zur Abzweigung einen Auslöseschalter (12, 13, 14) umfassen, der mit jeder Zelle verbunden ist, die Mittel zum Vergleich der Spannung einen Spannungssensor (21, 22, 23) umfassen, der mit jeder Zelle verbunden ist und mit einer Steuereinheit (24) verbunden ist, welche die genannten Auslöseschalter (12, 13, 14) steuert, und die Mittel zur Anwendung eines Inkrements an dem Ladestrom die genannte Steuereinheit (24) umfassen.

13. Vorrichtung gemäß Anspruch 12, **dadurch** charakterisiert, dass die Steuereinheit (24) außerdem Mittel zum Vergleich der Ausgänge der Temperatursensoren (25, 26, 27) jeder Zelle (5, 6, 7) mit einer Schwelle der Temperatur aufweist.

**Claims**

1. Method of charging several electrochemical cells (5, 6, 7), particularly lithium-polymer cells, connected in series to a charger (1) enabling the voltage and the charging current to be adjusted, a method whereby the voltage of each cell is continuously detected and when a cell has reached a predetermined voltage threshold, the current of this cell is diverted, **characterised in that** when a first cell reaches the voltage threshold an increment is applied to the charging current of the said several cells (5, 6, 7) and simultaneously there is connected in parallel to the said first cell a resistor for diverting a current equivalent to the increment of the charging current of the said several cells (5, 6, 7) and **in that**, when each of the following cells reaches the said voltage threshold there is also connected in parallel to each of the said following cells a resistor for diverting a current equal to the increment of the charging current of the said several cells (5, 6, 7).

2. Method of charging several electrochemical cells according to Claim 1, **characterised in that**, from the moment when the increment is applied to the charging current of the said several cells, if the part of the current not diverted causes overcharging in one of the ells which has reached the voltage threshold, at least one decremeut is applied to the charging current until the voltage of the said cell is again equal to the voltage threshold.

3. Method according to one of the Claims 1 or 2, **characterised in that** the current which is diverted is between 1% and 30%, and preferably from 5% to 15% of the charging current of all the cells (5, 6, 7).

4. Method according to Claim 3, **characterised in that** the charging current of all the cells (5, 6, 7) is calculated as a function of the temperature of each of the cells.

5. Method according to Claim 4, **characterised in that** if the temperature of at least one of the cells is outside a required temperature range the cells are heated or left to cool until their temperature is within the required range.

6. Method according to Claim 5, **characterised in that** the temperature range is between 40°C and 110°C inclusive, and preferably between 50°C and 100°C.

7. Method according to one of the Claims 1 to 6, **characterised in that** the charging current is calculated according to the formula:

$$I\_charge = A \exp\left[\frac{-B}{2T}\right] \cdot S$$

in which S is the free surface of the cells to be charged, A is between $80 \frac{mA}{cm^2}$ and $150 \frac{mA}{cm^2}$ inclusive and B is between 4200 K and 4800 K, and preferably between 4400 K and 4800 K.

8. Method according to Claim 7, **characterised in that** the surface capacity of each cell is calculated according to the formula:

$$Cmax\_charge = \frac{(\alpha T \div \beta \bullet S}{I\_charge}$$

and 3.2 in which $\alpha$ is

equal to $0.01 \dfrac{Ma^2}{Kcm^4}$ and $\beta$ is between

$3.3 \dfrac{mA^2}{cm^4}$ and $3.2 \dfrac{mA^2}{cm^4}$, and preferably between $3.24 \dfrac{mA^2}{cm^4}$ and $3.26 \dfrac{mA^2}{cm^4}$, and

S is the surface of each cell expressed in $cm^2$ and I_charge is the charging current according to the formula in Claim 7 wherein the charging time is between 5 and 15 hours, preferably between 7 and 10 hours:

9. Method according to Claim 8, **characterised in that** before a cell has reached the voltage threshold and when the difference in voltage between this cell and a cell which has a minimum charging voltage is higher that a predetermined figure, some of the charging current of this cell is diverted.

10. Method according to Claim 9. **characterised in that** the said difference in voltage is between 10mV and 200 mV inclusive.

11. Device for charging several electrochemical cells (5, 6, 7), particularly lithium-polymer cells, connected in series to a charger (1) which enables the voltage and the charging current to be adjusted, for using the method according to any one of the Claims i to 10, the said device comprising means of detecting the voltage (21, 22, 23) of each cell, means of diverting the current (15, 16, 17) from each cell, means of connecting (12, 13, 14) the said means of diversion to each cell (5, 6, 7), **characterised in that** it also has means of comparing the voltage of each cell with a voltage threshold (18, 19, 20), means of applying an increment (24) to the charging current of the said several cells (5, 6, 7) when the voltage in one of the said several cells (5, 6, 7) reaches a voltage threshold, and means of diverting some of the current (15, 16, 17) equivalent to the increment.

12. Device according to Claim 11, **characterised in that** the means of detecting the voltage of each cell include a voltage transducer (21, 22, 23), associated with each cell, the means of diverting current from each cell include a resistor (15, 16, 17), associated with each cell, the means for connecting the said means of diverting include a circuit-breaker (12, 13, 14), associated with each cell, the means of comparing voltage include a voltage transducer (21, 22, 23) associated with each cell connected to a control unit (24) which pilots the said circuit-breakers (12, 13, 14), the means of applying an increment to the charging current include the said control unit (24).

13. Device according to Claim 12, **characterised in that** the control unit (24) also includes means of comparing the outputs from the temperature transducers (25, 26, 27) of each cell (5, 6, 7) with a temperature threshold.

## FIG.1

FIG.2

U_mfcm

U_mdcm

U_mfcc

IV

I

III

II

U_mdcc

I_c + I_i

I,II,III,IV

II,I,IV

I_c

III

II,I

III,IV

IV

I

II

I_i

I,III,IV

II

I_c

0

$t_0$   $t_1$   $t_2$   $t_3$   $t_4$   $t_5$   $t_6$   $t_7$   $t_8$   t

FIG.3

EP 1 194 992 B1